# EUROPEAN PATENT APPLICATION

(11) **EP 1 394 766 A2**
(43) Date of publication of application: **03.03.2004**
(21) Application number: 03255256.4
(22) Date of filing: 22.08.2003
(51) Int. Cl.: G09G 5/00

(54) **Image display device and image display system**

(30) Priority: 30.08.2002 JP 2002252568
(71) Applicant: SEIKO EPSON CORPORATION, Tokyo 160-0811 (JP)
(72) Inventor: Takafumi, Ito, Suwa-shi Nagano-ken 392-8502 (JP)
(74) Representative: Sturt, Clifford Mark

(57) **Abstract**

The invention seeks to provide an image display device and an image display system capable of widely disclosing information on fine adjustment of image quality in each image display device of each user, centrally managing the information and mutually using the information. An image display device stores image quality adjustment values of image quality adjustment means and freely outputs the values to a floppy disk, a user PC or a host PC connected to an internet. The image quality adjustment value of one image display device 11 is formed in a predetermined format of file, outputted to a host PC 2 and stored centrally in the host PC 2. Also, the above file or the analysis result obtained by analyzing the above file is freely inputted to another image display device 21 through the internet 1.

## Description

The present invention relates to an image display device and an image display system that make it possible to disclose image quality adjustment information or fetch the disclosed image quality adjustment information.

In general, makers of image display devices adjust the quality of display images in the image display devices to average values in advance at the time of shipment thereof. The image display devices are different in their image quality from each other depending upon whether they are for domestic or export (for example, for each continent), for business (for example, for indoor and outdoor), for home, and the like, respectively.

Further, each user employing the devices independently carries out the fine adjustment of image quality, depending upon his/her preference, the environment and the like, respectively. Furthermore, the fine adjustment of image quality (hereinafter, may be referred to as an "adjustment") means that at least one of brightness, contrast, color saturation, gamma value (gradation characteristic) and color temperature is altered.

Therefore, a user may like to recommend his/her own adjustment condition (a successful model in the fine adjustment of image quality) for some other users.

Meanwhile, a user may like to know the adjustment condition (a successful model in the fine adjustment of image quality) of a specific user.

Furthermore, a user may like to know the average adjustment conditions of most of users depending upon contents (letters, character image, scenery, and the like) of images to be displayed or environments (scenery, regions, seasons, time, weather, races, sexes, ages or occupations of viewers, and the like).

In particular, since the commercial success or personal satisfaction of projected images along with expansion of the world market of projectors, expansion of variation in the business use, infiltration into personal home use and diversity of contents to be projected depends upon the above adjustment, the aforementioned requirements become more demanding.

However, as described above, since each user only carries out the above adjustment to each item, it is difficult to disclose his/her own adjustment condition to other users and to know the adjustment conditions of other users. Thus, problems of not being able to meet the above requirements occur.

The present invention has been made to solve the above problems, and it is an object of the present invention to provide an image display device such as a projector, and an image display system, capable of widely disclosing and mutually exchanging the information on the above adjustment.

The image display device according to the present invention comprises image quality adjustment means; storage means for storing predetermined image quality adjustment values; and output means for outputting the image quality adjustment values in the storage means to at least one of an information storage medium, a connected computer and a connected network.

According to this construction, the image quality adjustment values of the storage means in the image display device:
① can be directly outputted to the information storage medium (such as a flexible disk, etc.);
② can be outputted to a user computer (hereinafter, referred to as a "user PC") connected directly to the image display device and then outputted to the information storage medium from the user PC;
③ can be outputted to a user PC connected directly to the image display device and then transmitted from the user PC through the network to (i) another image display device, (ii) another user PC, or (iii) a host computer (hereinafter, referred to as a "host PC"); or
④ since the image display device and the user PC are connected directly to the network (including a local network), can be transmitted from the image display device through the network to (i) another image display device, (ii) another user PC, or (iii) a host PC, in accordance with instruction from the user PC.

Further, the image quality adjustment value means a generic term of a value indicating brightness, a value indicating contrast, a value indicating color saturation, a gamma value (gradation characteristic), a value indicating color temperature and the like.

In the above image display device, it is preferable that image quality adjustment values outputted from another image display device or another computer, are inputted through any one of the information storage medium, the connected computer, and the connected network.

According to this construction, since one image display device can receive the image quality adjustment values of another image display device and adjust the image quality in accordance with the image quality adjustment values, it is possible to easily share the manner of fine adjustment of the image quality in the image display device.

For example, the image quality adjustment values of another image display device:
① can be directly inputted to one image display device from the information storage medium (such as a flexible disk, etc.) storing the image quality adjustment values of another display device; or
② can be inputted to one user PC (connected directly to one image display device) from the information storage medium storing the image quality adjustment value of another image display device, and then inputted directly to the image display device; or
③ can be downloaded to one user PC connected to the network from another user PC or a host PC storing the image quality adjustment values of another image display device, and then inputted to the image display device directly or through the information storage medium; or
④ can be directly downloaded to one image display device connected to the network from another user PC or a host PC storing the image quality adjustment values of another image display device, in accordance with instruction from the user PC connected to the network; or
⑤ can be downloaded to one user PC from another user PC or a host PC storing the image quality adjustment values of another image display device in accordance with instruction from a third party user PC connected to the network, and then inputted to the image display device directly or through the information storage medium.

In the image display device, it is preferable that the image quality adjustment values stored in the storage means are updated to newly inputted image quality adjustment values.

According to this construction, the image quality adjustment values of the image quality adjustment means of one user are replaced with the image quality adjustment value of another user. Further, since the image quality adjustment values are updated whenever the image quality adjustment values are repeatedly inputted, the user can surely use the image quality adjustment values of another user.

Furthermore, it is preferable that an image quality adjustment file in which user information concerning a user and device information concerning an image display device are added to the image quality adjustment values is inputted or outputted.

According to this construction, since a feature of the image quality adjustment values becomes clear and the image quality adjustment values are unified into a predetermined file format, it becomes possible for a plurality of users to utilize such a file format, and since a data analysis can be performed, it is possible to widely utilize the image quality adjustment values.

For example, it is possible to know a specific user' tendency of adjusting the image quality; for example, the specific user intensifies contrast or intensifies red color regardless of the model of the image display device, etc.

Further, it is possible to know a tendency of adjusting the image quality in a certain kind (model, type) of image display device, for example, a plurality of users intensifies contrast or intensifies red color in a certain model of image display device, etc.

Furthermore, it is preferable that an image quality adjustment file in which one or both of content information concerning the contents of an image to be displayed and site information concerning the environment in which the image is to be displayed is added to the image quality adjustment values is inputted or outputted.

According to this construction, since the feature of the image quality adjustment values becomes clear, it is possible to widely utilize the image quality adjustment values. Further, since the image quality adjustment values are unified into a predetermined file format and thus various retrievals or data analysis can be performed, it is possible to obtain very fine image quality adjustment values (equal to an image quality adjustment-analysis values) according to a user's request.

For example, if as the content information, an image to be displayed which is mainly letters and numerals, characters, animals, plants, scenery, merchandises, etc. is written by predetermined content codes or text (characters), it is possible to extract and analyze the image quality adjustment values corresponding to, for example, the characters by designating and retrieving the contents (for example, characters). Therefore, it is possible to know the image quality adjustment values suitable for predetermined contents.

Furthermore, if as the site information, a case of front projection or rear projection, a case that the environment in which the image is to be displayed is in the conference room, in a shop window, on a street, on a mountain and plain, a case of a specific season or weather, a case of a specific age target group, a case of a specific continent or country, etc. is written by predetermined site codes or text (characters), it is possible to know a proper image quality adjustment values for predetermined environment (for example, conference room), similarly to the content information.

Furthermore, the retrieval of the user information, the device information, the content information and the site information is not limited to that based on a unique code or a unique text, but "AND retrieval or "OR retrieval" may be performed based on two or more codes or texts. For example, the retrieval of the site information may include a front projection and a conference room; a front projection, a conference room and a young group; a conference room or outdoors in fine weather, etc.

Furthermore, the retrieval may be performed through the combination of codes or texts written in each of the above information. For example, it may include a character and a conference room; a character, a conference room and a front projection, etc. In this regard, when the display image relates to a content for a young group or when the display site is a place where a young group gathers, "young group" is written in one of the content information or the site information, so that it is possible to retrieve the corresponding image quality adjustment file.

Therefore, since the image quality adjustment values suitable for the desired display environment can be easily extracted, it is possible to analyze the desired data.

It is preferable that the image display device further comprises information display means for displaying the image quality adjustment values.

According to this construction, by displaying the inputted or outputted image quality adjustment values, for example, in a liquid display, it is possible to confirm the image quality adjustment values with the naked eyes.

Furthermore, the image display system according to the present invention comprises a network, a host computer connected to the network, and at least one image display device connected to the network,
wherein image quality adjustment values of the at least one image display device are transmitted or received between the host computer and the at least one image display device through the network.

According to this construction, since the image quality adjustment values transmitted from one image display device are stored in the host computer (hereinafter, referred to as a "host PC"), the image quality adjustment values of a plurality of users are centrally managed by the host PC. Also, the image quality adjustment values stored in the host PC can be used in the image display devices of the plurality of users.

Furthermore, since the image display device is connected directly to the network (not connected indirectly to the network through a specific user PC), any user PC connected to the network can control the plurality of image display devices.

For example, a user PC installed in a specific branch office can control to transmit the image quality adjustment values of a plurality of image display devices in the aforementioned branch office to the host PC. Furthermore, instead of the user PC in the aforementioned branch office, a user PC in a head office can carry out the same control with respect to the plurality of image display devices in the aforementioned branch office.

Further, a user PC installed in a specific branch office can control to transmit the image quality adjustment values (for example, for an entrance, for an indoor show-room, for an outdoor advertisement, etc.) suitable for each of the devices among the image quality adjustment values stored in the host PC to the plurality of image display devices in the branch office.

Furthermore, since the user PC in the head office instead of the user PC in the branch office can carry out the same control with respect to the plurality of image display devices in the branch office, all the image quality adjustment values of the image display devices for an entrance can be easily made equal in accordance with the instruction from the user PC in the head office even if the image display devices for an entrance are provided anywhere in a plurality of branch offices.

Furthermore, the connection to the network may be made through either a wire or a wireless.

Furthermore, the image display system according to the present invention comprises a network, a host computer connected to the network, at least one user computer connected to the network, and at least one image display device connected to the user computer through at least one of a wireless medium, a wired medium and an information storage medium,
wherein image quality adjustment values of the at least one image display device are transmitted or received between the host computer and the at least one image display device through the user computer and the network.

According to this construction, since the image quality adjustment values outputted from one image display device are transmitted to the host PC through the one user PC, the image quality adjustment values of a plurality of users can be managed centrally in the host PC. Further, the image quality adjustment values stored in the host PC can be used in the image display devices of the plurality of users.

Furthermore, the delivery of the image quality adjustment values between the user PC and the image display device can be carried out easily and surely through a direct connection using a wireless or a wire or through an indirect connection using the information storage medium (such as a flexible disk, etc.). One or a plurality of image display devices can be freely connected to one user PC.

Furthermore, the image display system according to the present invention comprises a network, a host computer connected to the network, at least one first image display device connected to the network, at least one user computer connected to the network, and at least one second image display device connected to the at least one user computer through at least one of a wireless medium, a wired medium and an information storage medium,
wherein image quality adjustment values of at least one image display device are transmitted or received between the at least one first image display device and the at least one second image display device through the network, the host computer, and the user computer.

According to this construction, between the first image display device directly connected to the network and the second image display device indirectly connected to the network through the user PC, the image quality adjustment values of one image display device are transmitted to or received from another image display device, and thus the image quality adjustment values can be used mutually.

Further, once the image quality adjustment values of the respective image display devices are transmitted to the host PC, the image quality adjustment values are managed centrally regardless of the type of connection (direct connection or indirect connection) to the network.

Further, the image display system according to the present invention comprises a network, at least two first image display devices connected to the network, at least one user computer connected to the network, and at least two second image display devices connected to the user computer through at least one of a wireless medium, a wired medium and an information storage medium,
wherein image quality adjustment values of the at least two first image display devices are transmitted or received between the at least two first display devices through the network, or
wherein image quality adjustment values of the at least two second image display devices are transmitted or received between the at least two second image display devices through the user computer and the network, or
wherein image quality adjustment values of at least one image display device are transmitted or received between the at least two first image display devices and the at least two second image display devices through the user computer and the network.

According to this construction, the image quality adjustment values of one display device are directly transmitted to or received from another image display device, not through the host PC.

It is preferable that an image quality adjustment file in which user information concerning a user and device information concerning the image display device are added to the image quality adjustment values is transmitted or received.

According to this construction, since a feature of the image quality adjustment values becomes clear and the image quality adjustment values are unified into a predetermined file format, it becomes possible for a plurality of users to utilize such a file format, and since a data analysis can be performed, it is possible to widely utilize the image quality adjustment values.

For example, it is possible to know a specific user's tendency of adjusting the image quality; for example, the specific user intensifies contrast or intensifies red color regardless of the model of the image display device, etc.

Further, it is possible to know a tendency of adjusting the image quality in a certain kind (model, type) of image display device, for example, a plurality of users intensifies contrast or intensifies red color in a certain type of image display device, etc.

It is preferable that an image quality adjustment file in which one or both of content information concerning the contents of an image to be displayed and site information concerning the environment in which the image is to be displayed is added to the image quality adjustment values is transmitted or received.

According to this construction, since a feature of the image quality adjustment values becomes clear, it is possible to widely utilize the image quality adjustment values, and it is possible to utilize the image quality adjustment values for various retrievals or data analysis suitable for its purposes.

For example, as the content information, an image to be displayed that is mainly letters and numerals, characters, animals, plants, scenery, merchandises, etc. is written by predetermined content codes or texts (characters).

Further, as the site information, a case of front projection or rear projection, a case that the environment in which the image is to be displayed is in the conference room, in a shop window, on a street, on a mountain and plain, a case of a specific season or weather, a case of a specific age target group, a case of a specific continent or country, etc. is written by predetermined site codes or texts (characters).

It is preferable that at least one of image quality adjustment-analysis values per user obtained by analyzing the image quality adjustment values with respect to each user, image quality adjustment-analysis values for each image display device obtained by analyzing the image quality adjustment values with respect to each image display device, image quality adjustment-analysis values per content obtained by analyzing the image quality adjustment values with respect to each content of an image to be displayed, and image quality adjustment-analysis values per site obtained by analyzing the image quality adjustment values with respect to each environment in which the image is to be displayed is computed in the host computer based on the image quality adjustment file.

According to this construction, it is possible to more easily utilize the image quality adjustment values (equal to the image quality adjustment-analysis values).

For example, a specific user's tendency of adjusting the image quality; for example, the specific user intensifies contrast or intensifies red color regardless of the type of the image display device, etc. is interpreted as the image quality adjustment-analysis values per user.

Further, a tendency of adjusting the image quality in a certain model (type) of image display device, for example, "a plurality of users intensify contrast or intensify red color in a certain type of image display device, etc." is interpreted as the image quality adjustment-analysis values per device.

Further, the image quality adjustment values corresponding to such content (for example, character display) can be extracted and analyzed by designating the content (character display) to carry out the retrieval. Thus, the image quality adjustment values suitable for the content (character display) are interpreted as the image quality adjustment-analysis values per content.

Furthermore, by designating environment (for example, a conference room), similarly to the content information, the image quality adjustment values suitable for the environment (conference room) are interpreted as the image quality adjustment-analysis values per site.

Furthermore, the retrieval of the content information and the site information is not limited to that based on a unique code or a unique text, but "AND retrieval" or "OR retrieval" may be performed based on two or more codes or texts. For example, the retrieval of the site information may include a front projection and a conference room; a front projection, a conference room and a young group; a conference room or outdoors in fine weather, etc.

It is preferable that combined image quality adjustment-analysis values obtained by combining any two or more of a user, an image display device, contents of an image to be displayed and environment in which the image is to be displayed and analyzing the extracted image quality adjustment values, are computed in the host computer based on the image quality adjustment file.

That is, codes or texts written in each information of the image quality adjustment file, are arbitrarily combined to carry out the "AND retrieval" or the "OR retrieval. "

According to this construction, it is possible to more easily use the image quality adjustment values (equal to the combined image quality adjustment-analysis values).

For example, suitable image quality adjustment-analysis values are interpreted as the combined image quality adjustment-analysis values to correspond to more specified conditions such as a case of a specific model of image display device of a specific user, a case of displaying apparels in a show room, a case of displaying apparels in a show room using a specific model of image display device, and a case of rear-projecting a character image or apparels using a specific model of image display device in outdoors in fine weather.

Furthermore, it is preferable that at least one of the image quality adjustment-analysis values per user, the image quality adjustment-analysis values per device, the image quality adjustment-analysis values per content, the image quality adjustment-analysis values per site, or the combined image quality adjustment-analysis values is formed in a predetermined file format and is selectively transmitted to the image display device or the user computer.

According to this construction, by forwarding a desired condition to the host PC, it is possible to use the image quality adjustment-analysis values suitable for the condition.

Further, by making the manual image quality adjustment values (transmitted to the host PC) and the image quality adjustment-analysis values (received from the host PC) into a common file format, it is possible to simplify an application program for exchanging the image quality adjustment values and the image quality adjustment file.

Embodiments of the present invention will now be described by way of further example only and with reference to the accompanying drawings, in which:-
Fig. 1 is a constructional view illustrating a construction of the image display device according to a first embodiment of the present invention.
Fig. 2 is a constructional view illustrating a construction of the image display system according to a second embodiment of the present invention.
Fig. 3 is a flowchart illustrating a first example in Fig. 2.
Fig. 4 is a flowchart illustrating a second example in Fig. 2.
Fig. 5 is a flowchart illustrating a third example in Fig. 2.

Now, an image quality adjustment value and an image quality adjustment file will be first described, and then an image display device and an image display system will be described.

### (Image quality adjustment value)

In the present invention, the image quality adjustment value is a generic term for all of the respective adjustment items in finely adjusting the image quality. For example, the value refers to a set of a numerical value indicating brightness, a numerical value indicating contrast, a numerical value indicating color saturation, a gamma value (gradation characteristic) and a numerical value indicating color temperature, etc.

### (Image quality adjustment file)

The image quality adjustment file means that image quality adjustment values are filed in a predetermined format.

Table 1 shows an example of the image quality adjustment file. In table 1, the image quality adjustment file comprises (a) user information, (b) device information, (c) image quality adjustment value, (d) content information, (e) site information, and (f) special information.

Furthermore, the image quality adjustment file is treated as an effective file as long as at least one of the user information and the device information, and several image quality adjustment values are written therein, and the content information, or the site information, etc. is not always necessary.

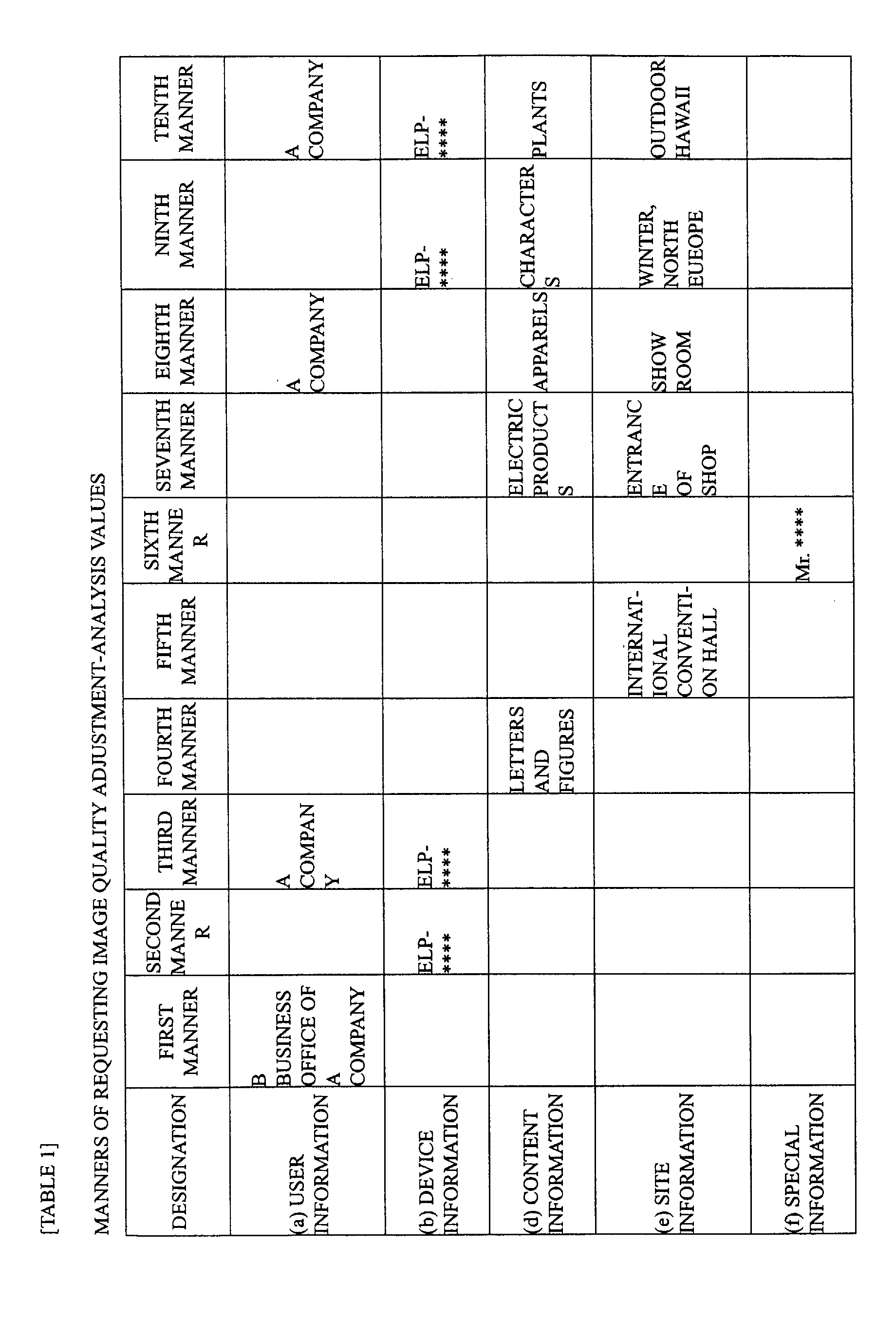

(a) The user information is written by user codes or texts (letters) in which user names using the image display devices are separately defined for each of the image display devices. Also, the user name is a name for specifying an organization (enterprise, business office, etc.) or an individual.
   Further, a user database corresponding to the user names or the user codes may be provided, and the content information and the site information for characterizing the users, which will be described later, may be registered in the user database.
(b) The device information includes the model of the image display devices (for example, type of a projector, etc.) and the serial numbers thereof. That is, when a plurality of the same model of image display devices are installed for one user, serial numbers attached to the respective devices are written to prevent image quality adjustment files from being overlapped (overwritten) in the host computer.
(c) The image quality adjustment value includes (i) a numerical value indicating brightness, (ii) a numerical value indicating contrast, (iii) a numerical value indicating density of red color, (iv) a numerical value indicating density of blue color, (v) a numerical value indicating density of yellow color, (vi) a gamma value and (vii) a numerical value indicating color temperature, which is properly added or removed correspondingly to an application program.
(d) In the content information, the contents of display images are written by separately defined codes or texts. For example, letters and figures, electrification products, apparels, characters, animals, plants, mountains, plains, oceans, etc. are mainly written.
(e) In the site information, environment in which a predetermined projection image is projected is written by separately defined site codes or texts. For example, front projection, rear projection, a conference room, a shop entrance, an outdoor show window, a huge street screen, a kindergarten, a school, an old people's home, female congregation, daytime, nighttime, seasons including spring, summer, autumn and winter, etc. are written.
(f) The special information includes, for example, a name (original) of the designer who designed the image quality adjustment value, a meaning of download (not original), a name or effect of the use when it is used for a special use, etc.

According to the aforementioned description, since the image quality adjustment file is prepared whenever the content information, the site information or the special information is added to or removed from a specific image display device of a specific user, a plurality of image quality adjustment files may be formed for one image display device. Meanwhile, regardless of the content information and the like, a unique image quality adjustment file is formed for an image display device using a constant image quality adjustment value.

### [First embodiment]

### (Image display device)

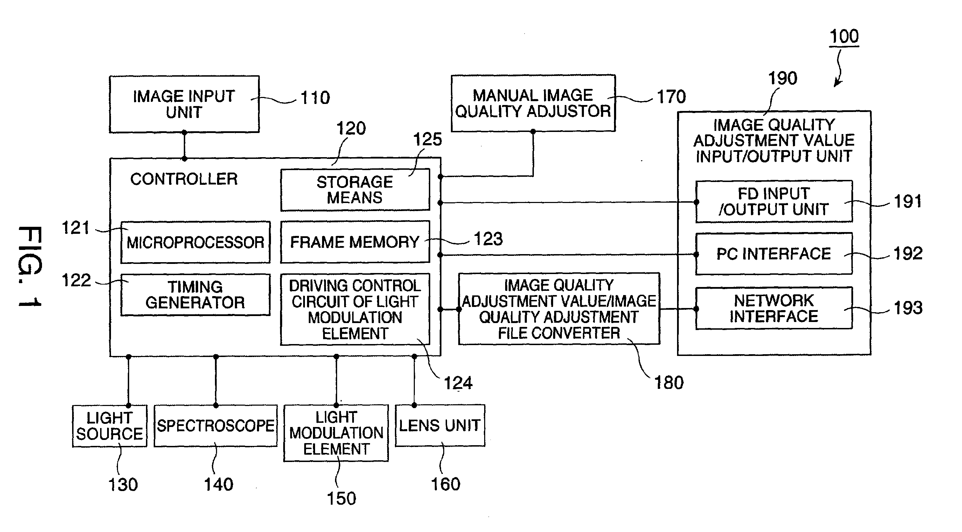

Fig. 1 is a constructional view illustrating a construction of the image display device according to a first embodiment of the present invention. In Fig. 1, 100 is an image display device (a projector), 110 is an image input unit, 120 is a controller, 130 is a light source, 140 is a spectroscope, 150 is a light modulation element, 160 is a lens unit, 170 is a manual image quality adjustor, 180 is an image quality adjustment value/image quality adjustment file converter, and 190 is an image quality adjustment value input/output unit.

The manual image quality adjustor 170 is for manually inputting image quality adjustment values. The inputted image quality adjustment values (hereinafter, referred to as "manual image quality adjustment values") are outputted to the controller 120 and stored in storage means 125. Further, the storage means 125 may be arranged in a position other than the controller 120.

The image quality adjustment input/output unit 190 comprises an FD input/output unit 191 for exchanging image quality adjustment values between an information storage medium (such as a flexible disk, etc.) and the image quality adjustment value input/output unit, a PC interface 192 for exchanging image quality adjustment values between a user PC and the image quality adjustment value input/output unit, and a network interface 193 for exchanging an image quality adjustment file between the network and the image quality adjustment value input/output unit.

Further, although Fig. 1 illustrates an image quality adjustment value input/output unit 190 comprising an FD input/output unit 191, a PC interface 192 and a network interface 193, which are selectively used in accordance with the following manners, the present invention is not limited thereto, but may comprise at least one of the FD input/output unit 191, the PC interface 192 and the network interface 193.

The image quality adjustment value/image quality adjustment file converter 180 forms image quality adjustment values outputted from the storage means 125 of the controller 120 into a predetermined format of image quality adjustment file in order to transfer such values through the network interface 193, also converts the image quality adjustment file input from the network interface 193 into image quality adjustment values. Thus, a predetermined application program is installed therein.

Furthermore, the image quality adjustment value/image quality adjustment file converter 180 and the FD input/output unit 191, or the image quality adjustment value/image quality adjustment file converter 180 and the PC interface 192 are connected to each other, and thereby the image quality adjustment file may be exchanged between the image display device 100 and the information storage medium, or between the image display device 100 and the user PC.

### (Output of image quality adjustment values)

In the manual image quality adjustor 170, the manually inputted manual image quality adjustment values are inputted to the controller 120 and stored in the storage means 125. The fine adjustment of image quality is accomplished based on the manual image quality adjustment values. Also, the manual image quality adjustment values are outputted to the user PC or transmitted to the host PC connected to the internet, in accordance with any one of the following manners.
① The manual image quality adjustment values outputted to the FD input/output unit 191 from the storage means 125 of the controller 120 is stored in the information storage medium (such as a flexible disk, etc.) in the FD input/output unit 191, and then outputted to the user PC through the information storage medium. Also, the manual image quality adjustment values are converted into an image quality adjustment file in the user PC (comprising the image quality adjustment value/image quality adjustment file converter) and then transmitted to the host PC through the internet.
② The manual image quality adjustment values outputted to the PC interface 192 from the storage means 125 of the controller 120 are outputted to the connected user PC. Then, the manual image quality adjustment values are converted into an image quality adjustment file in the user PC (comprising the image quality adjustment value/image quality adjustment file converter) and then transmitted to the host PC through the internet.
③ The manual image quality adjustment values outputted to the image quality adjustment value/image quality adjustment file converter 180 from the storage means 125 of the controller 120 are converted into an image quality adjustment file in the image quality adjustment value/image quality adjustment file converter 180. The image quality adjustment file is transmitted to the host PC directly through the internet from the network interface 193.

### (Input of image quality adjustment values)

Meanwhile, the image quality adjustment values (the same as the manual image quality adjustment values of the image display device which are formed in a file format) transmitted to the host PC or the image quality adjustment-analysis values (the same as an image quality adjustment-analysis file) computed in the host PC, which will be described later, are used in another image display device in accordance with any one of the following manners.
④ The image quality adjustment file or the image quality adjustment-analysis file (hereinafter, a combination thereof may be referred to as an "image quality adjustment file") in the host PC is downloaded to another user PC through the internet. Then, the image quality adjustment file or the image quality adjustment-analysis file is converted into image quality adjustment values or image quality adjustment-analysis values (hereinafter, a combination thereof may be referred to as "image quality adjustment values ") in the user PC (comprising the image quality adjustment value/image quality adjustment file converter) and then outputted to the information storage medium.
   Furthermore, the information storage medium is placed in the FD input/output unit 191. The image quality adjustment values outputted to the information storage medium are inputted to the controller 120 and stored in the storage means 125. Herein, the image quality adjustment values (the manual image quality adjustment values or the previously inputted image quality adjustment values) prior to such input are updated to newly inputted image quality adjustment values.
⑤ The image quality adjustment file in the host PC is downloaded to another user PC through the internet. Then, the image quality adjustment file is converted into image quality adjustment values in the user PC (comprising the image quality adjustment value/image quality adjustment file converter). Also, the image quality adjustment values are inputted to the controller 120 through the PC interface 192 and stored in the storage means 125. Herein, the image quality adjustment values prior to such input are updated to the newly inputted image quality adjustment values.
⑥ The image quality adjustment file in the host PC is downloaded to the image quality adjustment value/image quality adjustment file converter 180 of the image display device 100 through the network interface 193 directly from the internet. Then, the image quality adjustment file is converted into the image quality adjustment values in the image quality adjustment value/image quality adjustment file converter 180, inputted to the controller 120 and then stored in the storage means 125. Herein, the image quality adjustment values (the manual image quality adjustment values or the previously inputted image quality adjustment values) prior to such input are updated to the newly inputted image quality adjustment values.

Further, when updating into new image quality adjustment values in the storage means 125, the image quality adjustment values prior to such input may be preserved, and the newly inputted image quality adjustment values and the previous image quality adjustment values (may be plural) may be properly replaced for use.

Hitherto, although it has been described that the image quality adjustment value/image quality adjustment file converter 180 provided in the image display device 100 is connected only to the network interface 193, the image quality adjustment value/image quality adjustment file converter 180 may be connected to the FD input/output unit 191 and the PC interface 192. At that time, since the image quality adjustment file is exchanged between the image display device 100 and the user PC, it is unnecessary to provide the image quality adjustment value/image quality adjustment file converter 180 in the user PC.

### (Image display)

Therefore, in the image display device 100, the light emitted from the light source 130 enters the spectroscope 140. The projecting light source (emitted in the same color order as that of display data colors synchronized with the display timing of the light modulation element 150) is generated in the spectroscope 140, and then the projecting light source is irradiated to the light modulation element 150. Then, the respective color lights irradiated to the light modulation element 150 are subjected to the light modulation by the light modulation element 150, and thereby enlarged and projected to a screen through the lens unit 160 to be provided for color image display.

At that time, the controller 120 samples inputted image signals from a sampling circuit (not shown), while synchronous signals of the input image signals are sent to a microprocessor 121 and a timing generator 122. At the same time, the image data of the image signals is written in a frame memory 123 controlled by the timing generator 122.

Then, since the inputted image quality adjustment values (equal to the updated image quality adjustment values) are stored in the storage means 125 to control the timing generator 122 and the driving control circuit 124 of the light modulation element, the image quality adjustment function of reproducing a predetermined image quality is performed.

### [Second embodiment]

### (Construction of image display system)

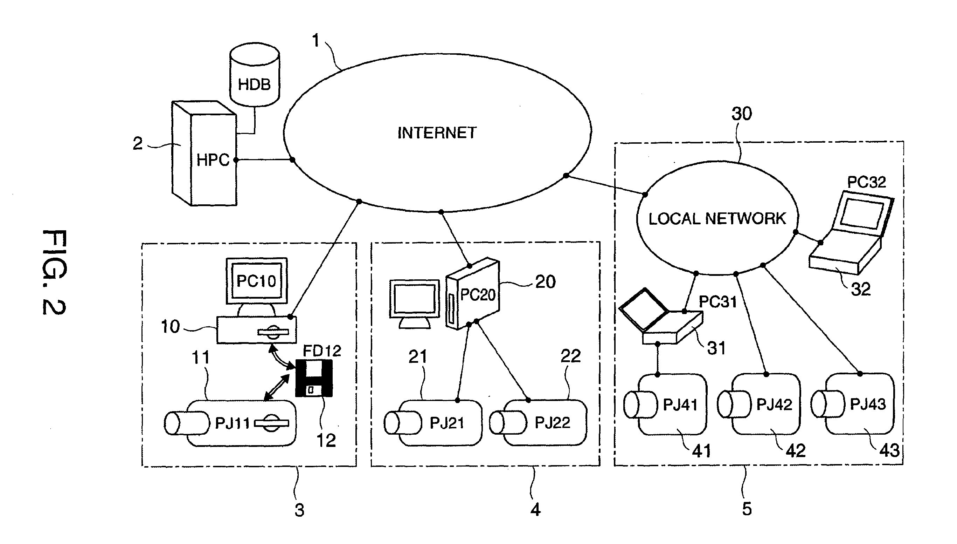

Fig. 2 is a constructional view illustrating a construction of the image display system according to a second embodiment of the present invention. In Fig. 2, 1 is the internet, 2 is a host computer (hereinafter, referred to as "HPC") in a predetermined maker, and 30 is a local network connected to the internet 1. 3 is a first user, 4 is a second user, and 5 is a third user.

Further, the first user 3, the second user 4 and the third user 5 are generic terms for all organizations (for example, enterprise, business office, etc.) or individuals for convenience of explanation.

Furthermore, the first user 3, the second user 4 or the third user 5 may be any of users in number, and some users may not exist. Also, user computers and image display devices in the respective users may be any in number.

### (First user)

In the first user 3, 10 is a user computer (hereinafter, referred to as "PC10") connected to the internet 1, 11 is an image display device (such as a projector, hereinafter, referred to as "PJ11"), and 12 is an information storage medium (such as a flexible disk; hereinafter, referred to as "FD12").

Further, PJ 11 has a FD input/output unit, and the image quality adjustment values of the PJ11 (hereinafter, referred to as "image quality adjustment values 11") are outputted (stored) to the FD12 at the FD input/output unit.

Furthermore, the FD12 is placed in the PC10 and the image quality adjustment values 11 are outputted to the PC10.

The PC10 has an image quality adjustment value/image quality adjustment file converter, in which the image quality adjustment values 11 are converted into an image quality adjustment file 11. Then, the image quality adjustment file 11 is transmitted to the HPC through the internet 1.

Furthermore, a predetermined application program is installed in the image quality adjustment value/image quality adjustment file converter of the PC10. Also, the PJ11 may be provided with the image quality adjustment value/image quality adjustment file converter, and the image quality adjustment file 11 may be outputted (stored) to the FD12 and then outputted to the PC10. In this regard, it is unnecessary to provide the image quality adjustment value/image quality adjustment file converter in the PC10.

Meanwhile, by a procedure reverse to the above output, the image quality adjustment file of another image display device transmitted to the HPC or the image quality adjustment-analysis file computed in the HPC which will be described later (hereinafter, a combination thereof may be referred to as an "image quality adjustment file") is converted into image quality adjustment values or image quality adjustment-analysis values (hereinafter, a combination thereof may be referred to as "image quality adjustment values") and then inputted to the PJ11.

Furthermore, the PC 10 may be connected to the internet 1 through the local network. Furthermore, the PC 10 may be indirectly connected to a plurality of image display devices through the information storage medium.

### (Second user)

In the second user 4, 20 is a user computer (hereinafter, referred to as "PC20") connected to the internet 1, and 21 and 22 are image display devices (such as projectors; hereinafter, referred to as "PJ21 and PJ22") connected to the PC20.

Further, the PJ21 and the PJ22 have the PC interfaces, respectively, and the image quality adjustment values (hereinafter, referred to as "image quality adjustment values 21 and 22", respectively) of the PJ21 and the PJ22 are outputted to the PC20 through the respective PC interfaces. Then, the image quality adjustment values are converted into image quality adjustment files 21 and 22 in the image quality adjustment value/image quality adjustment file converter, and thereby transmitted to the HPC through the internet 1.

Further, a predetermined application program is installed in the image quality adjustment value/image quality adjustment file converter. Furthermore, the image quality adjustment value/image quality adjustment file converter may be removed from the PC20 and may be provided in the PJ21 and the PJ22. At that time, the image quality adjustment file is exchanged between the PC20 and the PJ21 and PJ22 instead of the image quality adjustment values.

Meanwhile, by a procedure reverse to the above output, the image quality adjustment file in the HPC is converted into the image quality adjustment values in the PC20 and then inputted to the PJ21 and PJ22.

Further, the PC20 of the second user may be connected to the internet 1 through the local network. Furthermore, the number of the image display devices connected to the PC20 is not limited to two and may be any in number.

### (Third user)

In the third user 5, 30 is a local network connected to the internet 1, and 31 and 32 are user computers (hereinafter, referred to as "PC31 and PC32", respectively) connected to the local network 30, respectively. 41 is an image display device (such as a projector; hereinafter, referred to as "PJ41") connected to the PC31, and 42 and 43 are image display devices (such as projectors; hereinafter, referred to as "PJ42 and PJ43", respectively) directly connected to the local network 30, respectively.

Further, both the PJ42 and the PJ43 have an image quality adjustment value/image quality adjustment file converter and a network interface, respectively. Therefore, the image quality adjustment values of the PJ42 and the PJ43 (hereinafter, referred to as "image quality adjustment values 42 and 43", respectively) are converted into the image quality adjustment files 42 and 43 in accordance with instruction from the PC31 and the PC32, and then transmitted to the HPC through the local network 30 and the internet 1.

Furthermore, a predetermined application program is installed in one or both of the PC32 and the PC31.

Furthermore, the PJ41 functions similarly to the PJ21 and the PJ22 of the second user 4.

Meanwhile, by means of a procedure reverse to the above output, the image quality adjustment file in the HPC is downloaded (inputted) to the PJ42 and the PJ43.

Furthermore, one or both of the PC31 and the PC32 of the third user may be directly connected to the internet 1 instead of the local network 30. Furthermore, the user PCs and the image display devices may be any in number. For example, the PC32 (one computer) and PJ43 (one projector) may be directly connected to the internet 1.

### (Host computer)

By construction like the above, the image quality adjustment file (obtained by forming the manual image quality adjustment values in a predetermined format) of the respective image display devices is transmitted to the HPC from the respective users, and centrally stored in a host database (hereinafter, referred to as "HDB").

Further, the user information, device information, content information, site information and special information may be added to the image quality adjustment file, so that a predetermined retrieval and analysis is possible.

### [First example]

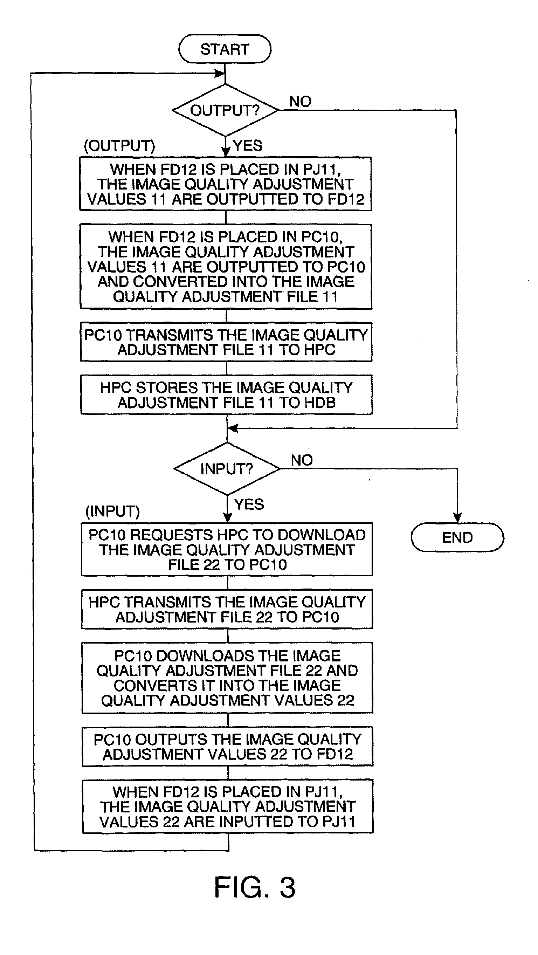

Fig. 3 is flowchart illustrating the first example in the image display system according to the second embodiment of the present invention. Fig. 3 is an example in the first user shown in Fig. 2. The same reference numerals are given to the same parts as in Fig. 2 and the explanation of some parts will be omitted.

That is,
① When the FD12 is placed in the FD input/output unit of the PJ11, the image quality adjustment values 11 of the PJ11 are outputted to the FD12.
② When the FD12 storing the image quality adjustment values 11 is placed in the PC 10, the image quality adjustment values 11 are outputted to the PC 10, and then converted into the image quality adjustment file 11 in the image quality adjustment value/image quality adjustment file converter.
③ Then, the PC 10 transmits the image quality adjustment file 11 to the HPC through the internet 1.
④ The HPC stores the image quality adjustment file 11 in the HDB.
⑤ Also, the PC10 requests the HPC through the internet 1 to download the image quality adjustment file (for example, image quality adjustment file 22) of another image display device (for example, PJ22) stored in the HDB.
⑥ The HPC transmits the image quality adjustment file (for example, image quality adjustment file 22) to the PC10 through the internet 1.
⑦ The PC10 downloads the image quality adjustment file (for example, image quality adjustment file 22), and converts the image quality adjustment file into the image quality adjustment values (for example, image quality adjustment values 22) in the image quality adjustment value/image quality adjustment file converter.
⑧ The PC 10 outputs the image quality adjustment values (for example, image quality adjustment values 22) to the FD12.
⑨ Then, when the FD12 is placed in the PJ 11, the image quality adjustment values (for example, image quality adjustment values 22) are inputted to the PJ11.

Then, the image quality adjustment values (for example, image quality adjustment values 22) are stored in the storage means similarly to the first embodiment and performs a predetermined image quality adjustment function.

Furthermore, although the above description has been made on a case where the image quality adjustment file of another image display device is downloaded, but instead, the image quality adjustment-analysis file, which will be described later, may be downloaded.

### [Second example]

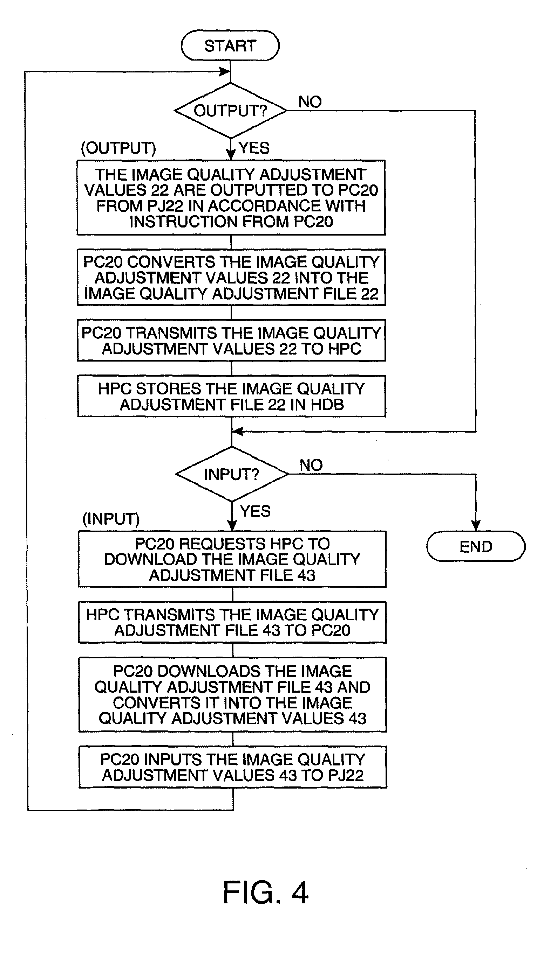

Fig. 4 is a flowchart illustrating a second embodiment in the image display system according to the second embodiment of the present invention. Fig. 4 is an example in the second user shown in Fig. 2. The same reference numerals are given to the same parts as in Fig. 2 and explanation of some parts will be omitted. That is,
① The image quality adjustment values 22 of the PJ22 are outputted to the PC20, in accordance with instruction from the PC20.
② The PC20 converts the image quality adjustment values 22 into the image quality adjustment file 22 in the image quality adjustment value/image quality adjustment file converter.
③ Then, the PC20 transmits the image quality adjustment file 22 to the HPC through the internet 1.
④ The HPC stores the image quality adjustment file 22 in the HDB.
⑤ Furthermore, the PC20 requests the HPC through the internet 1 to download the image quality adjustment file (for example, image quality adjustment file 43) of another image display device (for example, PJ43) stored in the HDB.
⑥ The HPC transmits the image quality adjustment file (for example, image quality adjustment file 43) to the PC20 through the internet 1.
⑦ The PC20 downloads the image quality adjustment file (for example, image quality adjustment file 43), and converts the image quality adjustment file into the image quality adjustment values (for example, image quality adjustment values 43) in the image quality adjustment value/image quality adjustment file converter.
⑧ Then the image quality adjustment values (for example, image quality adjustment values 43) are inputted to the PJ22, are stored in the storage means similarly to the first embodiment, and performs a predetermined image quality adjustment function.

Furthermore, although the above description has been made on a case where the image quality adjustment file of another image display device is downloaded, but instead, the image quality adjustment-analysis file, which will be described later, may be downloaded.

### [Third example]

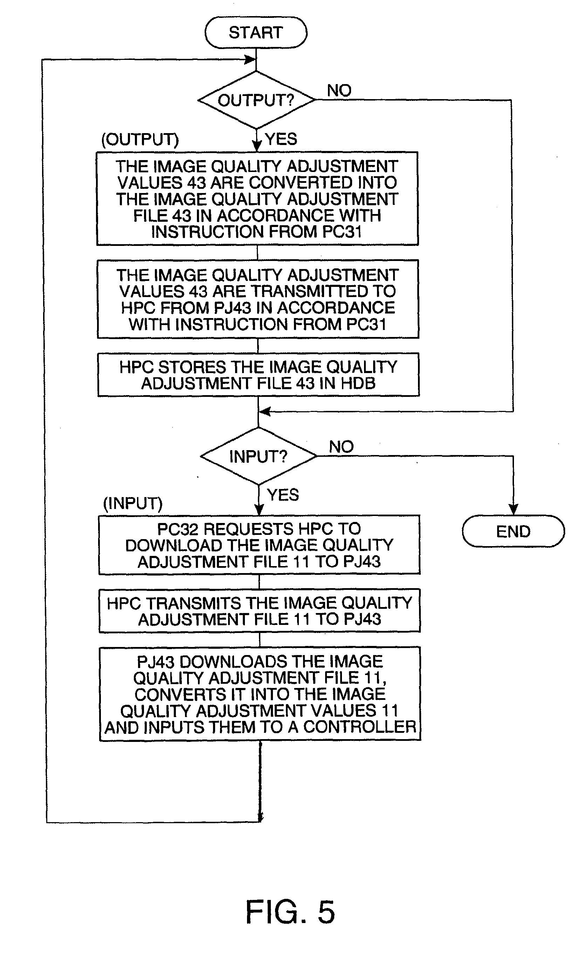

Fig. 5 is a flowchart illustrating the third example in the image display system according to the second embodiment of the present invention. Fig. 5 is an example in the third user shown in Fig. 2. The same reference numerals are given to the same parts as in Fig. 2 and the explanation of some parts will be omitted. That is,
① The image quality adjustment values 43 of the PJ43 are converted into an image quality adjustment file 43 in the image quality adjustment value/image quality adjustment file converter, in accordance with instruction from the PC31.
② In accordance with instruction from the PC31, the image quality adjustment file 43 is transmitted to the HPC through the local network 30 and the internet 1 from the PJ43.
③ The HPC stores the image quality adjustment file 43 in the HDB.
④ Furthermore, the PC32 requests the HPC through the local network 30 and the internet 1 to download the image quality adjustment file (for example, image quality adjustment file 11) of the image display device (for example, PJ11) of another user stored in the HDB to the PJ43.
⑤ The HPC transmits the image quality adjustment file (for example, image quality adjustment file 11) to the PJ43 through the internet 1 and the local network 30.
⑥ The PJ43 downloads the image quality adjustment file (for example, image quality adjustment file 11), converts the image quality adjustment file into the image quality adjustment values (for example, image quality adjustment values 11) in the image quality adjustment value/image quality adjustment file converter, and then inputs the image quality adjustment values to the controller.

Then, the image quality adjustment values are stored in the storage means similarly to the first embodiment, and perform a predetermined image quality adjustment function.

Furthermore, although the above description has been made on a case where the image quality adjustment file of another image display device is downloaded, but instead, the image quality adjustment-analysis file, which will be described later, may be downloaded.

Furthermore, although the description exemplifies both of the PC31 and the PC32 controlling the PJ43, the present invention is not limited thereto, but, for example, when one thereof is not available, another may control the PJ43.

### [Fourth example]

Although in the first to third examples, the image quality adjustment file (obtained by forming the manual image quality adjustment values in a predetermined file format) stored in the HPC (equal to the HDB) is downloaded to the user PC or the image display device, the present invention is not limited thereto. The image quality adjustment file may be directly exchanged not through the HPC, that is, in the image display system not provided with the HPC.

For example,
① the PC10 may request the PC20 (other party) through the internet 1 to transmit the image quality adjustment file 21 of the PC20 (other party) to the PC 10 (concerned party);
② the PC10 may instruct the PJ42 (other party) through the internet 1 to transmit the image quality adjustment file 42 of the PJ42 (other party) to the PC 10 (concerned party);
③ the PC31 may instruct the PC 10 (other party) through the local network 30 to download the image quality adjustment file 41 of the PC31 (concerned party) to the PC 10 (other party);
④ the PC31 may instruct the PJ42 (other party) through the local network 30 to download the image quality adjustment file 41 of the PC31 (concerned party) to the PJ42 (other party);
⑤ the PC31 may instruct the PC20 (other party) through the internet 1 to transmit the image quality adjustment value 21 of the PC20 (other party) to the PJ42 (third party); or
⑥ the PC31 may instruct the PJ42 (third party) through the internet 1 to receive the image quality adjustment value 21 of the PC20 (other party).

### [Fifth example]

Although there has been described in the first to third examples the case that the image quality adjustment file (obtained by forming the manual image quality adjustment values in a predetermined file format) of another image display device is downloaded from the HPC, the present invention is not limited thereto, but instead, the image quality adjustment-analysis file, which will be described later, will be downloaded.

Table 2 schematically illustrates the manners of describing a written request when requesting the download of the image quality adjustment-analysis values (image quality adjustment-analysis file).

**[Table 2]**

| ITEM | | IMAGE QUALITY ADJUSTMENT VALUE, ETC. |
|---|---|---|
| (a) USER INFORMATION | | |
| (b) DEVICE INFORMATION | | |
| (c) IMAGE ADJUSTMENT VALUE | | |
| | (i) NUMERICAL VALUE INDICATING BRIGHTNESS | |
| | (ii) NUMERICAL VALUE INDICATING CONTRAST | |
| | (iii) NUMERICAL VALUE INDICATING SATURATION OF RED COLOR | |
| | (iv) NUMERICAL VALUE INDICATING SATURATION OF BLUE COLOR | |
| | (v) NUMERICAL VALUE INDICATING SATURATION OF YELLOW COLOR | |
| | (vi) GAMMA VALUE | |
| | (vii) NUMERICAL VALUE INDICATING COLOR TEMPERATURE | |
| (d) CONTENT INFORMATION | | |
| (e) SITE INFORMATION | | |
| (f) SPECIAL INFORMATION | | |

### (User designation)

The first manner is to designate a specific user and to know a user's tendency of finely adjusting the image quality.

That is, the image quality adjustment-analysis values per user (may be referred to as "image quality adjustment-analysis values ") resulting from an analysis with respect to a specific user not relating to the device information, the content information, the site information and the special information are requested.

Further, the image quality adjustment-analysis values per user are computed with respect to the image quality adjustment file stored in the HDB by a predetermined application program installed in the HPC. A simple average value, the most frequent value, an average value of remainders excluding deviations having at least a predetermined size, and the like are employed in accordance with the respective features of the image quality adjustment values (for example, an average value is employed for the brightness, the most frequent value is employed for the contrast, etc.)

Furthermore, the image quality adjustment-analysis values per user are put together in a predetermined format of image quality adjustment-analysis file per user (may be referred to as an "image quality adjustment-analysis file") similarly to the image quality adjustment file (see Table 1), and are provided for the download instead of the image quality adjustment file.

### (Model designation)

The second manner is to designate a specific model (type) and to know a user's tendency of finely adjusting the image quality in such designated type of image display device.

That is, the image quality adjustment-analysis values per device (may be referred to as "image quality adjustment-analysis values") resulting from an analysis with respect to a specific model (type) not relating to the user information, the content information, the site information and the special information are requested. Furthermore, the image quality adjustment-analysis values per device and the image quality adjustment-analysis file per device (may be referred to as an "image quality adjustment-analysis file") are prepared similarly to the "user designation", and provided for the download.

### (User and model designation)

The third manner is to designate a specific user and a specific model (type) and to know a user's tendency of finely adjusting the image quality.

That is, the image quality adjustment-analysis values per user and device not relating to the content information, the site information and the special information, that is, the image quality adjustment-analysis values (are equal to the image quality adjustment values per user resulting from an analysis limited to a specific model and may be referred to as "image quality adjustment-analysis values") resulting from an analysis limited to a specific user are requested. Furthermore, the image quality adjustment-analysis values per user and device and the image quality adjustment-analysis file per user and device (may be referred to as an "image quality adjustment-analysis file") are prepared similarly to the "user designation", and provided for the download.

### (Content designation)

The fourth manner is to designate a specific content and know a user's tendency of finely adjusting the image quality.

That is, the image quality adjustment-analysis values per content (may be referred to as "image quality adjustment-analysis values ") resulting from an analysis with respect to a specific content (for example, the content to be projected is electrification products) not relating to the user information, the device information, the site information and the special information are requested.

Furthermore, the image quality adjustment-analysis values per content and the image quality adjustment-analysis file per content (may be referred to as an "image quality adjustment-analysis file") are prepared similarly to the "user designation", and provided for the download.

Furthermore, the target image quality adjustment file in this analysis is not limited to that extracted based on a unique content code or a unique text among content codes or texts written in the content information, but "AND retrieval" or "OR retrieval" may be performed based on two or more content codes or texts.

For example, the image quality adjustment-analysis values designating "character AND apparel" and focusing on both may be requested, and the image quality adjustment-analysis values designating "scenery OR plant" and being general to both may be requested.

### (Site designation)

The fifth manner is to designate display environment and know a user's tendency of finely adjusting the image quality.

That is, the image quality adjustment-analysis values per content (may be referred to as "image quality adjustment-analysis values") resulting from an analysis with respect to a specific site (for example, the place to be projected is a huge screen tower on a street) not relating to the user information, the device information, the content information and the special information are requested.

Furthermore, the image quality adjustment-analysis values per site and the image quality adjustment-analysis file per site (may be referred to as an "image quality adjustment-analysis file") are prepared similarly to the "user designation", and provided for the download.

Furthermore, the target image quality adjustment file in this analysis is not limited to that extracted based on a unique site code or a unique text among the site codes or texts written in the site information, but "AND retrieval" or "OR retrieval" may be performed based on two or more codes or texts.

For example, since "front projection AND street", "front projection AND street AND rainy weather", "Europe OR U.S.", "indoor OR fine weather AND outdoor", and the like can be combined, the image quality adjustment-analysis values per content suitable for the desired display environment is obtained.

### (Special information designation)

The sixth manner is to designate special information and to know a tendency of finely adjusting the image quality.

That is, the image quality adjustment-analysis values per special information (may be referred to as "image quality adjustment-analysis values ") resulting from an analysis with respect to specific information (for example, a name of a specific designer) not relating to the user information, the device information, the content information and the site information are requested.

Furthermore, the image quality adjustment-analysis values per special information and the image quality adjustment-analysis file per special information (may be referred to as an "image quality adjustment-analysis file") are prepared similarly to the "site designation", and provided for the download.

### (Combination designation)

The seventh to tenth manners are to properly combine the above first to sixth manners. That is, the seventh manner is to designate a specific content and a specific site.

The eighth manner is to designate a specific user, a specific content and a specific site.

The ninth manner is to designate a specific model (type), a specific content and a specific site.

The tenth manner is to designate a specific user, a specific model (type), a specific content and a specific site.

At that time, since the so-called "AND retrieval" or "OR retrieval" can be performed through the well-known retrieval technique for such designation, the desired image quality adjustment file is retrieved and extracted by focusing through the combination designation. Therefore, by data-analyzing the image quality adjustment file, the desired combined image quality adjustment-analysis values (may be referred to as "image quality adjustment-analysis values") and the combined image quality adjustment-analysis file (may be referred to as an "image quality adjustment-analysis file") are prepared similarly to the "user designation", and provided for the download.

Furthermore, combination of information such as the user information is not limited to the aforementioned manners, but the combinations according to a user's request can be made.

Therefore, a user can request the image quality adjustment-analysis values (equal to the image quality adjustment-analysis file) suitable for the desired display condition from the host PC through the user PC.

Furthermore, a user may store a plurality of image quality adjustment-analysis values in the storage means, and may selectively and suitably use them.

## Claims

1. An image display device, comprising:
image quality adjustment means;
storage means for storing predetermined image quality adjustment values; and
output means for outputting the image quality adjustment values in the storage means to at least one of an information storage medium, a connected computer, and a connected network.

2. The image display device according to Claim 1, wherein image quality adjustment values outputted from another image display device or another computer are inputted through any one of an information storage medium, a connected computer, and a connected network.

3. The image display device according to Claim 2, wherein the image quality adjustment values stored in the storage means are updated to newly inputted image quality adjustment values.

4. The image display device according to any one of Claims 1 to 3, wherein an image quality adjustment file in which user information concerning a user and device information concerning the image display device are added to the image quality adjustment values is inputted or outputted.

5. The image display device according to any one of Claims 1 to 4, wherein an image quality adjustment file in which one or both of content information concerning the contents of an image to be displayed and site information concerning the environment in which the image is to be displayed is added to the image quality adjustment values is inputted or outputted.

6. The image display device according to any one of Claims 1 to 5, further comprising information display means for displaying the image quality adjustment values.

7. An image display system comprising a network, a host computer connected to the network, and at least one image display device connected to the network,
wherein image quality adjustment values of the at least one image display device are transmitted or received between the host computer and the at least one image display device through the network.

8. An image display system comprising a network, a host computer connected to the network, at least one user computer connected to the network, and at least one image display device connected to the user computer through at least one of a wireless medium, a wired medium and an information storage medium,
wherein image quality adjustment values of the at least one image display device are transmitted or received between the host computer and the at least one image display device through the user computer and the network.

9. An image display system comprising a network, a host computer connected to the network, at least one first image display device connected to the network, at least one user computer connected to the network, and at least one second image display device connected to the at least one user computer through at least one of a wireless medium, a wired medium and an information storage medium,
wherein image quality adjustment values of at least one image display device are transmitted or received between the at least one first image display device and the at least one second image display device through the network, the host computer, and the user computer.

10. An image display system comprising a network, at least two first image display devices connected to the network, at least one user computer connected to the network, and at least two second image display devices connected to the user computer through at least one of a wireless medium, a wired medium and an information storage medium,
wherein image quality adjustment values of the at least two first image display devices are transmitted or received between the at least two first display devices through the network, or
wherein image quality adjustment values of the at least two second image display devices are transmitted or received between the at least two second image display devices through the user computer and the network, or
wherein image quality adjustment values of at least one image display device are transmitted or received between the at least two first image display devices and the at least two second image display devices through the user computer and the network.

11. The image display system according to any one of Claims 7 to 10, wherein an image quality adjustment file in which user information concerning a user and device information concerning the image display device are added to the image quality adjustment values is transmitted or received.

12. The image display system according to any one of Claims 7 to 11, wherein an image quality adjustment file in which one or both of content information concerning the contents of an image to be displayed and site information concerning the environment in which the image is to be displayed is added to the image quality adjustment values is transmitted or received.

13. The image display system according to Claim 11 or 12, wherein at least one of image quality adjustment-analysis values per user obtained by analyzing the image quality adjustment values with respect to each user, image quality adjustment-analysis values for each image display device obtained by analyzing the image quality adjustment values with respect to each image display device, image quality adjustment-analysis values per content obtained by analyzing the image quality adjustment values with respect to each content of an image to be displayed, and image quality adjustment-analysis values per site obtained by analyzing the image quality adjustment values with respect to each environment in which the image is to be displayed are computed in the host computer based on the image quality adjustment file.

14. The image display system according to Claim 11 or 12, wherein combined image quality adjustment-analysis values obtained by combining any two or more of a user, an image display device, contents of an image to be displayed and environment in which the image is to be displayed and analyzing the extracted image quality adjustment values are computed in the host computer based on the image quality adjustment file.

15. The image display system according to any one of Claims 7 to 9, wherein at least one of the image quality adjustment-analysis values per user, the image quality adjustment-analysis values per device, the image quality adjustment-analysis values per content, and the image quality adjustment-analysis values per site according to Claim 13, and the combined image quality adjustment-analysis values according to Claim 14 is formed in a predetermined file format and is selectively transmitted to the image display device or the user computer.
